# FASCICULE DE BREVET EUROPEEN

(11) **EP 0 543 758 B1**
(45) Date de publication et mention de la délivrance du brevet: **01.10.1997**
(21) Numéro de dépôt: 92470032.1
(22) Date de dépôt: 05.11.1992
(51) Int. Cl.: C22B 5/14, C21B 13/00

(54) **Installation de traitement de réduction du minerai de fer en lit fluidisé circulant**
Vorrichtung zum Reduzieren eisenoxydhaltiger Materialien in einer zirkulierenden Wirbelschicht
Apparatus for reducing iron oxide materials in a circulating fluidized bed

(30) Priorité: 19.11.1991 FR 9114467
(43) Date de publication de la demande: 26.05.1993
(73) Titulaire: SOLLAC, 92800 Puteaux (FR)
(72) Inventeur: Nicolle, Rémy, F-78370 Plaisir (FR); De Lassat, Yann, F-57070 Metz (FR)
(74) Mandataire: Ventavoli, Roger

(56) Documents cités:
- EP-A- 0 022 098
- EP-A- 0 255 180
- FR-A- 2 272 176
- GB-A- 2 068 769

## Description

L'invention concerne le domaine de la réduction du minerai de fer dans des installations fonctionnant avec un lit fluidisé circulant de minerai.

Actuellement, des recherches sont activement conduites afin de mettre au point des procédés sidérurgiques qui pourraient se substituer au haut fourneau. Les inconvénients du haut fourneau que de tels procédés visent à éliminer seraient son manque de souplesse de fonctionnement, et la nécessité de lui associer une cokerie et une installation d'agglomération du minerai de fer. Par ailleurs, il faudrait que les nouveaux procédés conservent les excellentes performances énergétiques du haut fourneau.

Ces nouveaux procédés sont souvent désignés par le terme : procédés de "fusion réduction" ou "smelting reduction". L'un d'entre eux associe deux réacteurs. L'un de ces réacteurs produit à partir de minerai de fer du minerai très fortement réduit à l'état métallique, qui est enfourné dans le deuxième réacteur pour être transformé en fonte liquide. Les circuits gazeux de ces deux réacteurs peuvent être liés l'un à l'autre, ou être totalement indépendants.

Une forme de réalisation particulière d'un tel procédé est décrite par exemple dans l'article "Réduction of fine ore in the circulating fluid bed as the initial stage in smelting reduction (Metallurgical Plant and Technology International, mars 1991, pp 28-32). La réaction de réduction du minerai de fer s'effectue en faisant réagir un lit fluidisé circulant formé par des particules de minerai en cours de réduction et de semi-coke, avec un gaz réducteur (mélange CO/CO₂/H₂/H₂0) qui assure également la fluidisation. Celle-ci a lieu dans une première partie du réacteur. Les gaz chargés en particules de minerai en cours de réduction et de semi-coke passent ensuite dans un cyclone. Les gaz s'échappent alors du réacteur, tandis que les particules descendent dans un gazéifieur, où sont introduits séparément du charbon et de l'oxygène dans le but de former du CO et de l'hydrogène qui vont contribuer à la réduction du minerai. Les matières solides et les gaz reviennent ensuite dans la première partie du réacteur. Du minerai neuf est introduit dans le courant de matières entre le cyclone et le gazéifieur. Les gaz qui se sont échappés du cyclone sont épurés et réintroduits dans le gazéifieur et à la base de la première partie du réacteur, où ils peuvent rejouer leur rôle de milieu fluidisant et réactionnel. Une technique similaire est décrite dans EP-A-255 180.

Dans le type d'appareil qui vient d'être décrit, l'injection d'oxygène pur dans le gazéifieur peut être à l'origine de problèmes opératoires. Cette injection crée des zones à haute température riches en oxygène dans lesquelles le minerai de fer déjà partiellement ou totalement réduit en fer métallique peut fondre partiellement, s'agglomérer et se réoxyder. Il y a ainsi un risque de formation de blocs oxydés qui seront difficiles à réduire à nouveau, et surtout à entraîner et à évacuer. Le minerai fondu et réoxydé peut également se déposer sur les parois du gazéifieur et l'encrasser considérablement. Ces risques sont d'autant plus élevés que la concentration en fer du lit fluidisé est plus importante.

Un brûleur oxygène-charbon entrant dans un réacteur à lit fluidisé, utilisant des gaz réducteur formés par combustion partielle de matières carbonées pour la réduction d'oxydes de fer est divulgué dans GB-A-2 068 769. La réaction entre le charbon et l'oxygène a lieu dans le réacteur.

Le but de l'invention est de supprimer ces points chauds et oxydants dans le gazéifieur pour y éviter la réoxydation et la fusion des particules de minerai de fer déjà réduit en circulation.

A cet effet, l'invention a pour objet une installation de réduction du minerai de fer, du type comprenant :
- un premier réacteur contenant un lit de minerai de fer en cours de réduction, pourvu de moyens pour fluidiser et mettre en circulation ledit minerai, et comportant un dispositif d'injection d'un gaz réducteur contenant du CO et de l'hydrogène à la base dudit premier réacteur ;
- un cyclone assurant la séparation entre les gaz réducteurs contenant du CO et de l'hydrogène issus dudit premier réacteur et les particules solides qu'ils contiennent, et l'évacuation desdits gaz réducteurs ;
- un réacteur de gazéification recueillant lesdites particules, pourvu de moyens de production de CO et d'hydrogène à partir de matières carbonées et d'oxygène, et de moyens de renvoi dudit CO, dudit hydrogène et desdites particules dans ledit premier réacteur ;
- des moyens de mélange de minerai neuf auxdites particules entre ledit cyclone et ledit réacteur de gazéification ;
- des moyens d'extraction du minerai en cours de réduction à partir dudit premier réacteur ; installation caractérisée en ce que lesdits moyens de production de CO et d'hydrogène du réacteur de gazéification comprennent un brûleur oxygène-charbon réalisant la production du CO et de l'hydrogène hors dudit réacteur.

Comme on l'aura compris, l'invention consiste à ne plus réaliser la production du CO et de l'hydrogène dans le réacteur de gazéification par des injections séparées de charbon et d'oxygène dans ce réacteur , mais à réaliser cette production hors du réacteur, de manière à éviter d'y introduire de l'oxygène pur.

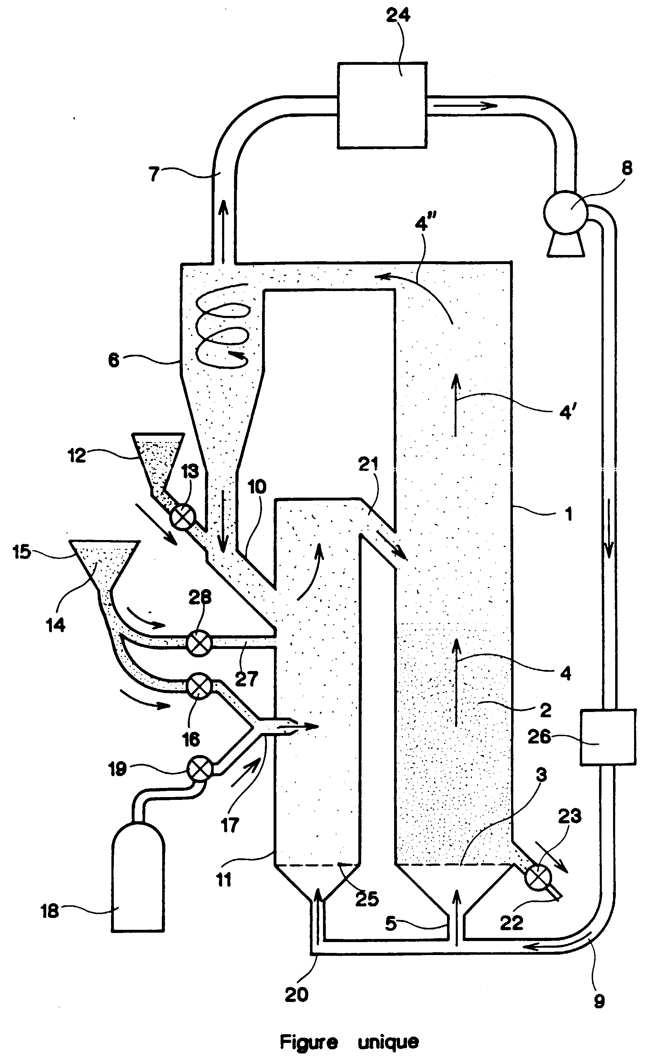

L'invention sera mieux comprise à la lecture de la description qui suit et fait référence à la figure unique annexée, qui schématise l'installation selon l'invention.

La figure unique montre une installation de réduction du minerai de fer composée essentiellement de trois parties. Un premier réacteur 1 contient à sa base un lit 2 de matières solides relativement dense, contenant essentiellement du minerai de fer se trouvant pour sa plus grande partie à l'état réduit, mélangé à du semi-coke. Ce lit 2 repose sur un support 3 perméable aux gaz. Le lit 2 est traversé par un courant gazeux de fluidisation qui le met en circulation à travers l'installation, comme indiqué par les flèches 4, 4', 4". Ce gaz de fluidisation est un gaz réducteur, à savoir un mélange CO/CO₂/H₂/H₂0 qui est injecté à la base du réacteur 1 par une conduite 5. Il se déplace à une vitesse de l'ordre de 2 à 10 m/s. Au cours de leur cheminement dans le réacteur 1, les particules de minerai de fer initialement à l'état naturel oxydé subissent une réduction en fer métallique par le CO et l'hydrogène des gaz de fluidisation. Les gaz et les matières solides pénètrent ensuite dans un cyclone 6, dans lequel ils sont séparés les uns des autres. Les gaz sont évacués du cyclone par une conduite 7, alors que les matières solides retombent dans la partie inférieure du cyclone 6. Les gaz sont épurés du CO₂ et de la vapeur d'eau qu'ils contiennent dans un réacteur approprié 24 d'un type connu en soi, sont renvoyés par des moyens adaptés symbolisés par la pompe 8 et la conduite 9 vers la base du réacteur 1, après être passés par un préchauffeur 26, et sont à nouveau utilisés pour la fluidisation et la réduction du minerai. Les matières solides sortant du cyclone 6 sont amenées par une conduite 10 vers un réacteur de gazéification 11. Sur cette conduite 10 est connectée une trémie 12 contenant du minerai neuf à réduire, dont l'admission dans l'installation est commandée par la vanne 13.

Le réacteur de gazéification 11 a pour fonctions de générer le gaz servant à la fluidisation et à la circulation des matières, et de fournir l'énergie nécessaire à l'équilibre du bilan thermique. A cet effet, selon l'Art Antérieur, on y réalise des injections séparées d'oxygène et de matières carbonées, telles que du charbon, ces matières carbonées étant en excès. On forme ainsi du CO et de l'hydrogène (avec un certaine proportion de CO₂ et de vapeur d'eau) qui, dans le reste de l'installation vont réagir avec le minerai pour le réduire en fer et s'oxyder eux-mêmes en CO₂ et H₂O, alors que le charbon en excès se transforme en semi-coke. La température des gaz est de l'ordre de 950°C, et la proportion de CO qu'ils contiennent est d'environ 30 %.

L'inconvénient de réaliser ces injections de charbon et d'oxygène de manière séparée est que l'on crée dans le réacteur de gazéification 11 des zones à très haute température, dans lesquelles le minerai déjà réduit en fer qui se trouve dans le courant de matières peut fondre partiellement, s'agglomérer et se réoxyder. On obtient ainsi des blocs inaptes à la fluidisation qui retombent dans la partie inférieure du réacteur de gazéification 11, ou vont se coller sur ses parois.

Selon l'invention, les matières carbonées 14, contenues par exemple dans une trémie 15, sont introduites par une vanne 16 dans un brûleur 17. Ce brûleur 17 est alimenté également par de l'oxygène contenu dans un récipient 18 muni d'une vanne 19. Dans ce brûleur 17 a lieu la combustion en CO des matières carbonées 14 et la formation d'hydrogène, puis le CO et l'hydrogène ainsi formés sont introduits dans le réacteur de gazéification 11. Par rapport à l'Art Antérieur, on réduit le volume des zones à fort potentiel oxydant à l'intérieur du gazéifieur 11, et les pointes locales de température sont amoindries, du fait que l'oxygène ne peut plus réagir avec le gaz fluidifiant et le fer. Avantageusement, une partie du mélange CO/CO₂/H₂/H₂0 servant à la réduction et à la fluidisation est également introduite à la base du réacteur de gazéification 11 par une conduite 20 connectée à la conduite 9 qui amène ces mêmes gaz au premier réacteur. On assure ainsi la fluidisation des particules solides dans le réacteur de gazéification. Le réacteur de gazéification 11 est également muni dans sa partie inférieure d'une grille 25 perméable aux gaz évitant une retombée excessive de matières solides dans la conduite 20. La conduite 21 assure la communication entre la réacteur de gazéification 11 et le premier réacteur 1. On obtient ainsi un courant continu de matières solides circulantes (minerai, fer et semi-coke) à travers les trois grandes parties de l'installation.

L'ensemble de l'installation constitue en théorie un réacteur parfaitement brassé, dans lequel, en régime permanent, la composition chimique des matières transportées est la même à tout moment et en tout point du réacteur. Par suite de la densité du fer métallique, qui est plus forte que celle du minerai, et de sa capacité à s'agglomérer par fusion partielle aux autres particules, la proportion de fer métallique dans la zone basse du premier réacteur 1 est plus importante que dans les autres parties de l'installation. C'est donc ici qu'a lieu, par une conduite d'évacuation 22 munie d'une vanne 23, l'extraction périodique ou continue des matières solides de l'installation. Ces matières, composées de minerai de fer réduit à 75 % au moins et de semi-coke, sont alors prêtes à être introduites dans un réacteur de fusion où sera produite la fonte.

Bien entendu, sans sortir de l'esprit de l'invention, des modifications peuvent être apportées à l'installation telle qu'elle vient d'être décrite. En particulier, l'apport de gaz contenant du CO et de l'hydrogène à la base du premier réacteur 1 et du réacteur de gazéification 11 peut avoir d'autres origines que les gaz s'échappant du cyclone 6. Ils peuvent, par exemple, provenir d'un réacteur assurant la fusion et la réduction complète du minerai réduit et sa transformation en fonte.

De même, il est possible et même conseillé, afin d'agir sur le comportement du minerai de fer, d'introduire du charbon directement dans le réacteur de gazéification 11, indépendamment de l'injection de charbon réalisée dans le brûleur 17. A cet effet, la trémie 15 contenant le charbon peut être reliée à une conduite 27 débouchant dans le réacteur de gazéification 11, l'admission du charbon dans le réacteur 11 étant commandée par la vanne 28.

## Revendications

1. Installation de réduction du minerai de fer, du type comprenant :
- un premier réacteur (1) contenant un lit de minerai de fer en cours de réduction, pourvu de moyens pour fluidiser et mettre en circulation ledit minerai, et comportant un dispositif d'injection d'un gaz réducteur contenant du CO et de l'hydrogène à la base dudit premier réacteur (1) ;
- un cyclone (6) assurant la séparation entre les gaz réducteurs contenant du CO et de l'hydrogène issus dudit premier réacteur (1) et les particules solides qu'ils contiennent, et l'évacuation desdits gaz réducteurs ;
- un réacteur de gazéification (11) recueillant lesdites particules, pourvu de moyens de production de CO et d'hydrogène à partir de matières carbonées et d'oxygène, et de moyens (21) de renvoi dudit CO, dudit hydrogène et desdites particules dans ledit premier réacteur (1) ;
- des moyens (10,12) de mélange de minerai neuf auxdites particules entre ledit cyclone (6) et ledit réacteur de gazéification (11) ;
- des moyens (22, 23) d'extraction du minerai en cours de réduction à partir dudit premier réacteur (1) ;
installation caractérisée en ce que lesdits moyens de production de CO et d'hydrogène du réacteur de gazéification comprennent un brûleur oxygène-charbon (17) réalisant la production du CO et de l'hydrogène hors dudit réacteur.

2. Installation selon la revendication 1, caractérisée en ce qu'elle comporte des moyens (5, 8, 9) pour injecter à la base dudit premier réacteur (1) au moins une partie des gaz réducteurs contenant du CO et de l'hydrogène évacués dudit cyclone (6).

3. Installation selon la revendication 1 ou 2, caractérisée en ce qu'elle comporte des moyens (20) pour injecter dans le réacteur de gazéification (1) une partie des gaz réducteurs contenant du CO et de l'hdyrogène évacués dudit cyclone (6).

4. Installation selon l'une des revendications 1 à 3, caractérisée en ce qu'elle comporte des moyens (27,28) pour injecter du charbon directement dans le réacteur de gazéification (11).

## Patentansprüche

1. Anlage zur Reduktion von Eisenerz des Typs, aufweisend:
- Einen ersten Reaktor (1), der eine Schicht aus sich in Reduktion befindlichem Eisenerz enthält, der mit Mitteln zum Verwirbeln und zum Zirkulierenlassen des Erzes versehen ist und eine Vorrichtung zum Einleiten von reduzierendem Gas, das CO und Wasserstoff enthalt, in die Basis des unteren Reaktors (1) aufweist,
- einen Zyklon (6), der die Trennung zwischen den reduzierenden Gasen, die CO und Wasserstoff enthalten, die von dem ersten Reaktor (1) ausgetragen werden, und den Festen Stoffen sicherstellt, die in ihnen enthalten sind, und das Austragen dieser reduzierenden Gase,
einen Verkohlungsreaktor (11), der die Partikel sammelt, der mit Mitteln zur Erzeugung von CO und Wasserstoff aus kohlehaltigen Stoffen und Sauerstoff und mit Mitteln (21) zum Rückführen des CO, des Wasserstoffs und der Partikel in den ersten Reaktor (1) versehen ist,
- Mitteln (10, 12) zum Mischen neuen Erzes zu den Partikeln zwischen dem Zyklon (6) und dem Verkohlungsreaktor (11),
- Mitteln (22, 23) zum Austragen des Erzes im Lauf der Reduktion aus dem ersten Reaktor (1),
wobei die Anlage dadurch gekennzeichnet ist, daß die Mittel zur Erzeugung von CO und Wasserstoff des Verkohlungsreaktors einen Sauerstoff-Kohlebrenner (17) aufweisen, der die Erzeugung des CO und des Wasserstoffs aus diesem Reaktor zustandebringt.

2. Anlage nach Anspruch 1, dadurch gekennzeichnet, daß sie Mittel (5, 8, 9) zum Einleiten in die Basis des ersten Reaktors (1) wenigstens eines Teils der reduzierenden Gase aufweist, die das CO und den Wasserstoff enthalten, die aus dem Zyklon (6) ausgetragen werden.

3. Anlage nach Anspruch 1 oder 2, dadurch gekennzeichnet, daß sie Mittel (20) zum Einleiten in den Verkohlungsreaktors (1) eines Teils der reduzierenden Gase aufweist, die das CO und den Wasserstoff enthalten, die aus dem Zyklon (6) ausgetragen werden.

4. Anlage nach einem der Ansprüche 1 bis 3, dadurch gekennzeichnet, daß sie Mittel (27, 28) zum Einleiten der Kohle direkt in den Verkohlungsreaktor (11) aufweist.

## Claims

1. Plant for the reduction of iron ore, of the type comprising:
- a first reactor (1) containing a bed of iron ore being reduced, provided with means for fluidizing and for circulating the said ore, and including a device for injecting a reducing gas containing CO and hydrogen at the base of the said first reactor (1);
- a cyclone (6) separating the reducing gases containing CO and hydrogen coming from the said first reactor (1) from the solid particles which they contain, and evacuating the said reducing gases;
- a gasification reactor (11) collecting the said particles, the said gasification reactor being provided with means for producing CO and hydrogen, from carbonaceous materials and from oxygen, and with means (21) for returning the said CO, the said hydrogen and the said particles into the said first reactor (1);
- means (10, 12) for mixing fresh ore with the said particles between the said cyclone (6) and the said gasification reactor (11);
- means (22, 23) for extracting the ore being reduced from the said first reactor (1);
which plant is characterized in that the said means for producing CO and hydrogen of the gasification reactor comprise an oxygen-coal burner (17) producing the CO and hydrogen outside the said reactor.

2. Plant according to Claim 1, characterized in that it includes means (5, 8, 9) for injecting at least some of the reducing gases containing CO and hydrogen, which are evacuated from the said cyclone (6), at the base of the said first reactor (1).

3. Plant according to Claim 1 or 2, characterized in that it includes means (20) for injecting some of the reducing gases containing CO and hydrogen which are evacuated from the said cyclone (6) into the gasification reactor (11).

4. Plant according to one of Claims 1 to 3, characterized in that it includes means (27, 28) for injecting coal directly into the gasification reactor (11).
